# EUROPÄISCHE PATENTANMELDUNG

(11) **EP 1 256 494 A2**
(43) Veröffentlichungstag der Anmeldung: **13.11.2002**
(21) Anmeldenummer: 02007115.5
(22) Anmeldetag: 28.03.2002
(51) Int. Cl.: B60R 25/02

(54) **Verriegelungsvorrichtung für eine Lenkspindel**

(30) Priorität: 10.05.2001 DE 10123095
(71) Anmelder: Kiekert Aktiengesellschaft, 42579 Heiligenhaus (DE)
(72) Erfinder: Armbruster, Stefan, Dipl.-Ing., 42579 Heiligenhaus (DE); Bartels, Markus, 45468 Mülheim (DE)
(74) Vertreter: Nunnenkamp, Jörg, Dr.

(57) **Zusammenfassung**

Gegenstand der vorliegenden Erfindung ist eine Verriegelungsvorrichtung für eine Lenkspindel (1) einer Lenkeinrichtung. Diese verfügt über eine die Lenkspindel (1) umschließende Aufnahmebuchse (2) für hierin geführte und sich an der Lenkspindel (1) abwälzende Blockadeelemente (3). Die Blockadeelemente (3) lassen in ihrer Entriegelungsstellung Drehbewegungen der Lenkspindel (1) zu und unterbinden in ihrer Verriegelungsstellung solche Drehbewegungen. Erfindungsgemäß werden die Blockadeelemente (3) in ihrer Entriegelungsstellung zur Verhinderung einer unbeabsichtigten Sperrwirkung von der Lenkspindel (1) abgehoben und legen sich in Verriegelungsstellung blockierend an die Lenkspindel (1) an.

## Beschreibung

Die Erfindung betrifft eine Verriegelungsvorrichtung für eine Lenkspindel einer Lenkeinrichtung, mit einer die Lenkspindel umschließenden Aufnahmebuchse für hierin geführte und sich an der Lenkspindel abwälzende Blockadeelemente, wobei die Blockadeelemente in ihrer Entriegelungsstellung Drehbewegungen der Lenkspindel zulassen und in ihrer Verriegelungsstellung unterbinden. - Bei den Blockadeelementen handelt es sich größtenteils um zylindrische Rollen, die üblicherweise an der Lenkspindel anliegen und sich an ihrem Außenumfang abwälzen. Selbstverständlich werden von der Erfindung auch andersartig gestaltete Blockadeelemente umfasst.

Beim Stand der Technik, von dem die Erfindung ausgeht, wird so vorgegangen, dass die Blockadeelemente bzw. Rollen auf einer inneren zylindrischen Laufbahn laufen, die von der Außenfläche der Lenkspindel bzw. Lenksäule gebildet wird. In einer ersten Stellung (Verriegelungsstellung der Blockadeelemente) verklemmen sich die bekannten Rollen zwischen einer Klemmfläche in der Aufnahmebuchse und der angegebenen zylindrischen Laufbahn an der Lenksäule, so dass die Lenksäule bzw. Lenkspindel drehfest gegenüber der ortsfesten Aufnahmebuchse blockiert wird. Das gelingt sowohl bei Drehungen der Lenkspindel im Uhrzeigersinn als auch im Gegenuhrzeigersinn. Dagegen geben die Blockadeelemente in ihrer Entriegelungsstellung die Lenkspindel für ungehinderte Rotationen frei.

Im Einzelnen ist zum Sperren einer ersten Drehrichtung zwischen Laufbahn und Klemmfläche ein erster Käfig mit zugehörigen Rollen vorgesehen und zum Sperren einer zweiten Drehrichtung ein zweiter Käfig ebenfalls mit Rollen, wobei beide Käfige in entgegengesetzten Richtungen drehverstellbar sind.

Bei der vorbehandelten Lehre sind die Blockadeelemente bzw. Rollen ständig in Kontakt mit der Lenkspindel, so dass in der Entriegelungsstellung nicht mit letzter Sicherheit ausgeschlossen werden kann, dass die Lenkspindel bei Fehlfunktionen ungewollt blockiert wird. Solche Fehlfunktionen lassen sich beispielsweise auf einen Einbruchsversuch zurückführen, der möglicherweise die Rollen oder andere Bauteile beschädigt hat, so dass diese in der Aufnahmebuchse herum vagabundieren können und so eine solche ungewollte Blockade verursachen können(vgl. DE 32 08 375 C2).

Ähnliche Probleme tauchen beim ferner einschlägigen Stand der Technik auf, wozu nur beispielhaft auf die FR 2 456 644 oder die US 1 443 958 verwiesen wird. - Hier will die Erfindung insgesamt Abhilfe schaffen.

Der Erfindung liegt das technische Problem zugrunde, eine Verriegelungsvorrichtung des eingangs beschriebenen Aufbaus so weiterzuentwickeln, dass insbesondere in Entriegelungsstellung der Blockadeelemente zuverlässig sichergestellt wird, dass ein ungewolltes Sperren der Lenkspindel unterbleibt.

Zur Lösung dieser Aufgabe schlägt die Erfindung bei einer gattungsgemäßen Verriegelungsvorrichtung für eine Lenkspindel einer Lenkeinrichtung vor, dass die Blockadeelemente in ihrer Entriegelungsstellung zur Verhinderung einer unbeabsichtigten Sperrwirkung von der Lenkspindel abgehoben werden und sich in Verriegelungsstellung an die Lenkspindel blockierend anlegen. Dabei werden die Blockadeelemente vorzugsweise in Verriegelungsstellung zwischen Lenkspindel und Aufnahmebuchse verkeilt und blockieren auf diese Weise die Lenkspindel. Grundsätzlich können die Blockadeelemente aber auch die Lenkspindel in der Art einer Klaue blockieren.

Folglich besteht nach Lehre der Erfindung in der Entriegelungsstellung der Blockadeelemente keine mechanische Wälzverbindung mehr zwischen diesen Elementen und der Lenkspindel. Denn die Blockadeelemente werden - wie beschrieben - von der Lenkspindel um ein vorgegebenes Maß abgehoben, sind von dieser also beabstandet. Dementsprechend können gegebenenfalls beschädigte Teile der Lenkspindel, der Aufnahmebuchse, der Blockadeelemente usw. nicht (mehr) die freie Rotation der Lenkspindel in der Entriegelungsstellung behindern.

Dagegen wird in Verriegelungsstellung der Blockadeelemente gleichsam konventionell vorgegangen, weil sich bei (wieder) an die Lenkspindel angelegten Blockadeelementen diese hieran abwälzen bzw. an die Lenkspindel zwecks Blockade angedrückt werden. Kommt es nicht zu einer solchen Presswirkung auf die Blockadeelemente zwecks Festlegung der Lenkspindel, so wälzen sich die Blockadeelemente an der Lenkspindel ab, was alternativ ebenfalls unweigerlich zu einer Blockade der Lenkspindel führt. Denn die Abwälzbewegung der Blockadeelemente wird in jeder Drehrichtung durch eine entsprechend geformte zulaufende Kontur oder Sperrfläche in der Aufnahmebuchse gebremst. Das heißt, die Blockadeelemente werden in ihrer Verriegelungsstellung zwischen Lenkspindel und Aufnahmebuchse verkeilt und blockieren auf diese Weise die Lenkspindel.

Im Einzelnen sieht die Erfindung zur Realisierung der Entriegelungsstellung vor, dass die Blockadeelemente mittels Schiebern in Richtung Verriegelungsstellung vorgespannt sind und in Entriegelungsstellung auf Anlaufschrägen auflaufen, die die Blockadeelemente in der Entriegelungsstellung von der Lenkspindel beabstanden und in Verriegelungsstellung entfernt werden, so dass sich die Blockadeelemente an die Lenkspindel anlegen können und diese blockieren. Die Anlaufschrägen sorgen also in Verbindung mit den Schiebern für den Übergang der Blockadeelemente von der Entriegelungsstellung in die Verriegelungsstellung und umgekehrt.

In der Entriegelungsstellung befinden sich die Blockadeelemente auf den Anlaufschrägen, während diese in Verriegelungsstellung entfernt sind, so dass die Blockadeelemente in Wälzkontakt mit der Lenkspindel treten können. Weil es sich bei den Blockadeelementen zumeist um zylindrische oder tonnenförmige Rollen handelt, führen in der Verriegelungsstellung Drehbewegungen der Lenkspindel dazu, dass die Blockadeelemente bzw. Rollen sich hierauf abwälzen und in einer entsprechend gewählten Kontur in der Aufnahmebuchse geklemmt werden, wie dies bereits beschrieben wurde.

Es hat sich als vorteilhaft erwiesen, die Anlaufschrägen an in die Laufbahn der Blockadeelemente eintauchenden Nasen auszubilden. Diese Nasen sind größtenteils mit ihren Anlaufschrägen als Uhrzeigersinnnasen und Gegenuhrzeigersinnnasen ausgebildet, die jeweils von einem Ring getragen werden. D. h., es existiert ein Ring für die Uhrzeigersinnnasen mit zugehörigen Anlaufschrägen und ebenso ein Ring für die Gegenuhrzeigersinnnasen mit den betreffenden Anlaufschrägen.

Beide Ringe umschließen in der Regel die Lenkspindel koaxial und lassen sich in Bezug auf eine Lenkspindelachse drehen, um die Anlaufschrägen gegenüber den Blockadeelementen verstellen zu können. Das geschieht im Einzelnen so, dass jeweils zwei Anlaufschrägen mit entgegengesetzter Neigung zwischen zwei Blockadeelementen angeordnet sind, wobei eine der beiden Blockadeelemente die Lenkspindel im Uhrzeigersinn und das andere Blockadeelement gegen den Uhrzeigersinn sperrt. Die beiden Anlaufschrägen zwischen den zwei Blockadeelementen gehören einerseits zu der Uhrzeigersinnnase und andererseits zu der Gegenuhrzeigersinnnase, werden also von den beiden jeweils unterschiedlichen Ringen getragen.

Folglich lassen sich die beiden Anlaufschrägen zwischen den zwei Blockadeelementen in Entriegelungsstellung voneinander beabstanden und in Verriegelungsstellung zusammenfahren, weil dies lediglich voraussetzt, dass die zugehörigen Ringe mit entsprechendem Drehsinn beaufschlagt werden. Zur Erhöhung der Sicherheit ist nun ferner vorgesehen, dass bei in Entriegelungsstellung voneinander beabstandeten Anlaufschrägen bzw. zugehöriger Uhrzeigersinnnase und Gegenuhrzeigersinnnase zwischen diese beiden Anlaufschrägen bzw. die sie tragenden Nasen jeweils ein Sicherungssteg einfährt. Dieser Sicherungssteg verhindert ein unbeabsichtigtes Anlegen der Blockadeelemente oder von Teilen hiervon an die Lenkspindel.

Dabei hat es sich als besonders vorteilhaft erwiesen, wenn der jeweilige Sicherungssteg von einem Sicherungsschieber getragen wird, der in Entriegelungsstellung der Blockadeelemente in Richtung der Lenkspindelachse bewegt wird, so dass die hieran befestigten Sicherungsstege zwischen die von der Lenkspindel beabstandeten Blockadeelemente bzw. Nasen mit Anlaufschrägen einfahren. Denn hierdurch ist gewährleistet, dass sämtliche Blockadeelemente in Entriegelungsstellung in dieser Position von dem jeweiligen Sicherungssteg gehalten werden, wobei hierfür zusammengenommen der die jeweiligen Sicherungsstege tragende Sicherungsschieber sorgt.

Die Stellung des Sicherungsschiebers in Axialrichtung, d. h. in Richtung der Lenkspindelachse, lässt sich mittels eines Sensors, beispielsweise eines Schalters, überprüfen. Die Signale dieses Sensors bzw. Schalters werden von einer Steuereinheit zumindest dahingehend ausgewertet, ob die Entriegelungsstellung der Blockadeelemente erreicht worden ist oder nicht. Diese Steuereinheit mag dabei ein zugehöriges Kraftfahrzeug für den Betrieb erst dann freigeben, wenn der Sicherungsschieber mit den zugehörigen Sicherungsstegen vollständig zwischen die Blockadeelemente in Entriegelungsstellung eingefahren ist. Denn dann kann gewährleistet werden, dass die Lenkspindel nicht unbeabsichtigt blockiert wird, durch z. B. abgebrochene Teile der Blockadeeinheit infolge eines Diebstahlversuchs.

Dabei sind die Blockadeelemente und die zugehörigen Schieber so in einer Nut in der Aufnahmebuchse aufgenommen, dass selbst Bruchstücke einzelner Teile hiervon in entriegeltem Zustand bzw. in der Entriegelungsstellung nicht zwischen die Aufnahmebuchse und die Lenkspindel gelangen können. Der Sicherungsschieber sichert dann die Lage und Funktion der Blockadeelemente mit Hilfe der zugehörigen Sicherungsstege. Und zwar im Einzelnen durch seine Anlage an den die Anlaufschrägen tragenden Nasen exakt an einer Stelle, die letztlich am Ende der Kette der Elemente Schieber-Blockadeelement - Anlaufschräge bzw. Nase liegt. Folglich wird hierdurch die gesamte davor befindliche Funktionskette gleichsam überprüft, wenn sich der Sicherungsschieber bis zum Erreichen seiner mittels des Sensors abgefragten Endstellung in Entriegelungsstellung der Blockadeelemente einfahren lässt. Damit werden Fehlfunktionen von jedem davor liegenden Bauteil automatisch überprüft bzw. verhindert. Hierin sind die wesentlichen Vorteile zu sehen.

Im Folgenden wird die Erfindung anhand einer lediglich ein Ausführungsbeispiel darstellenden Zeichnung näher erläutert; es zeigen:
- **Fig. 1**: eine Explosionsdarstellung der erfindungsgemäßen Verriegelungsvorrichtung;

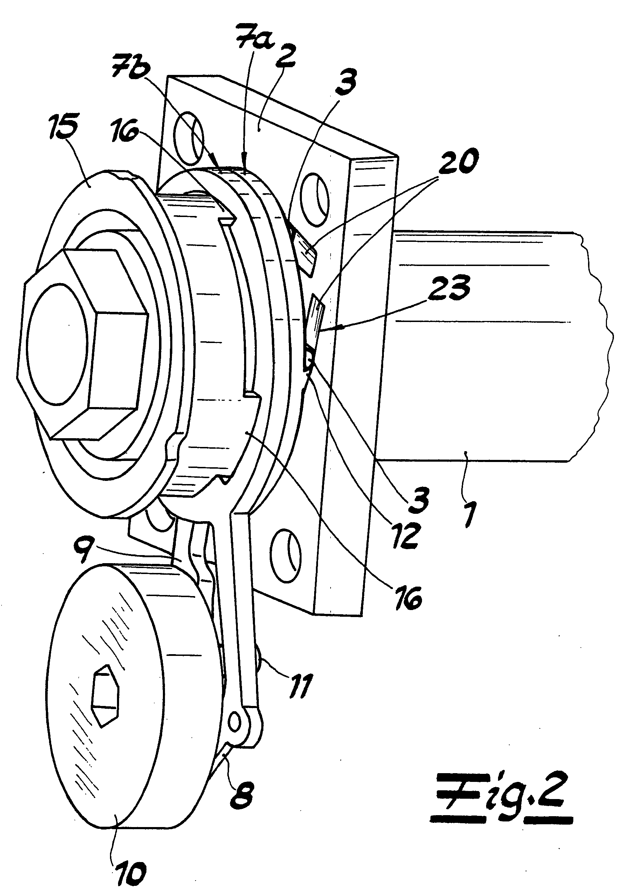

- **Fig. 2**: den Gegenstand nacht Fig. 1 in zusammengebautem Zustand perspektivisch und reduziert auf die wesentlichen Bauteile,
- **Fig. 3**: eine Ansicht auf den zusammengebauten Gegenstand nach Fig. 2 in verriegeltem Zustand der Blockadeelemente,
- **Fig. 4**: den Gegenstand nach Fig. 3 bei entriegelten Blockadeelementen ohne eingefahrenen Sicherungsschieber und
- **Fig. 5**: die Funktionsstellung nach Fig. 4 mit eingefahrenem Sicherungsschieber.

In den Figuren ist eine Verriegelungsvorrichtung für eine Lenkspindel 1 einer Lenkeinrichtung dargestellt. Diese Lenkeinrichtung gehört vorliegend zu einem Kraftfahrzeug, kann jedoch grundsätzlich auch Bestandteil anderer Vorrichtungen oder Fahrzeuge oder sogar eines Schiffes sein. Zum grundsätzlichen Aufbau der Verriegelungsvorrichtung für die Lenkspindel 1 der Lenkeinrichtung gehören eine ortsfeste Aufnahmebuchse 2 sowie hierin geführte Blockadeelemente 3, bei denen es sich um tonnenförmige oder zylindrische Rollen 3 handeln mag. Die Rollen 3 wälzen sich an der Lenkspindel 1 bzw. ihrem Außenumfang ab.

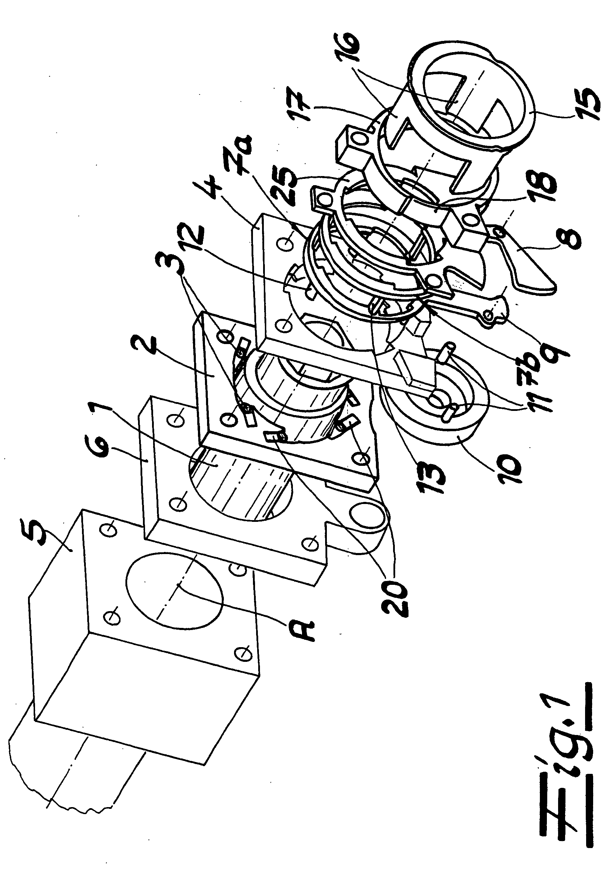

Neben der Aufnahmebuchse 2 erkennt man in der Fig. 1 noch eine Abdeckplatte 4 sowie weitere Führungs- und Befestigungselemente 5, 6 für die Lenkspindel 1, die im Rahmen der vorliegenden Erfindung keine besondere Funktion übernehmen.

Von Bedeutung sind dagegen ein Ring 7a sowie ein Ring 7b, die sich jeweils um eine Achse A bzw. Lenkspindelachse A der Lenkspindel 1 drehen lassen. Zu diesem Zweck sind die beiden Ringe 7a, 7b mit Auslegern 8, 9 ausgerüstet, die von einer angetriebenen Abtriebsscheibe 10 mit Auslenkzapfen 11 beaufschlagt werden. Hierdurch lassen sich die beiden Ringe 7a, 7b wahlweise im Uhrzeigersinn und Gegenuhrzeigersinn um die Achse bzw. Lenkspindelachse A drehen.

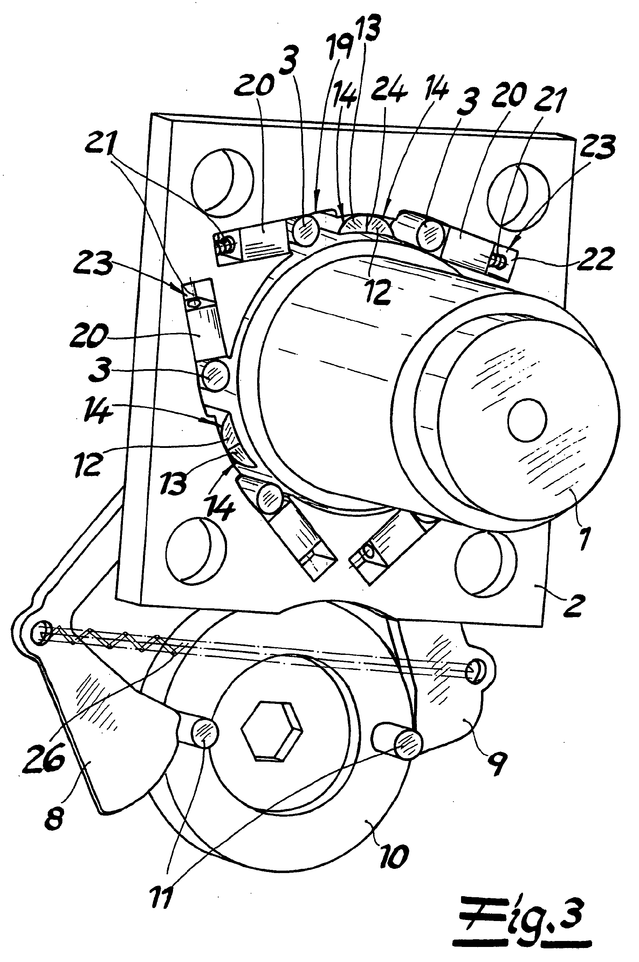

Der Ring 7a trägt auf ihm aufstehende Uhrzeigersinnnasen 12, während der korrespondierende Ring 7b mit Gegenuhrzeigersinnnasen 13 ausgerüstet ist. Beide Nasen 12, 13 verfügen jeweils über Anlaufschrägen 14, die mit den Blockadeelementen 3 zusammen wirken, wie nachfolgend noch näher erläutert wird (vgl. beispielsweise Fig. 3 bis 5).

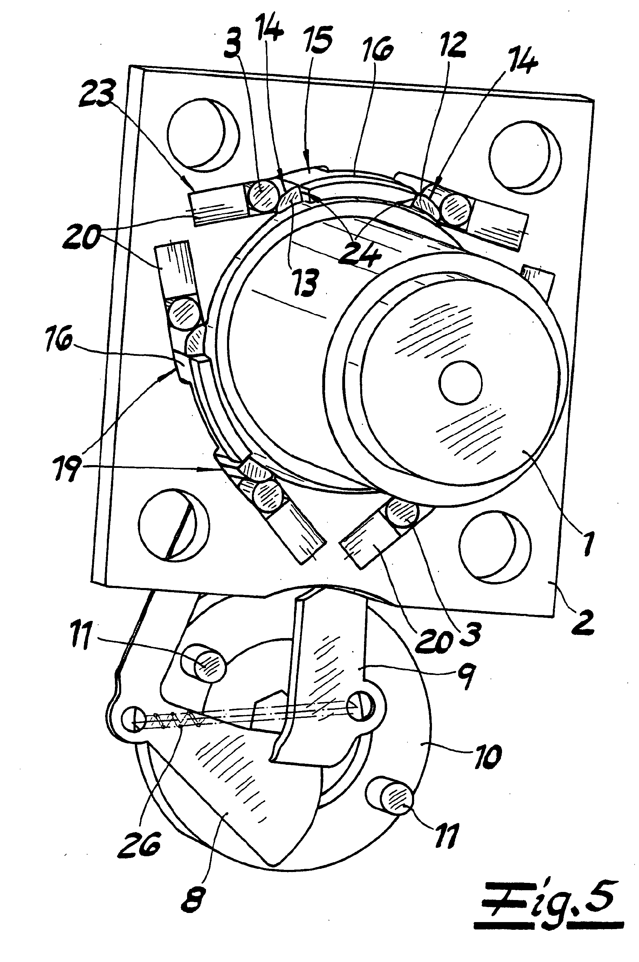

Schließlich gehört zum grundsätzlichen Aufbau ein Sicherungsschieber 15, der mit zugehörigen Sicherungsstegen 16 ausgerüstet ist, die sich in Richtung der Achse A erstrecken. Der Sicherungsschieber 15 lässt sich in Richtung der Achse A, d. h. axial, verschieben, wobei seine in Fig. 5 dargestellte Endposition mit Hilfe eines nicht ausdrücklich gezeigten Sensors, beispielsweise Schalters, abgefragt wird. Zur axialen Führung des Sicherungsschiebers 15 bzw. der zugehörigen Sicherungsstege 16 ist eine Führungsplatte 17 mit Ausnehmungen 18 für die einzelnen Sicherungsstege 16 vorgesehen. Daneben erkennt man in der Fig. 1 noch einen Deckel 25 für die beiden Ringe 7a, 7b.

Die Funktionsweise der vorbeschriebenen Einzelteile ist wie folgt. In Entriegelungsstellung der Lenkspindel 1 (vgl.

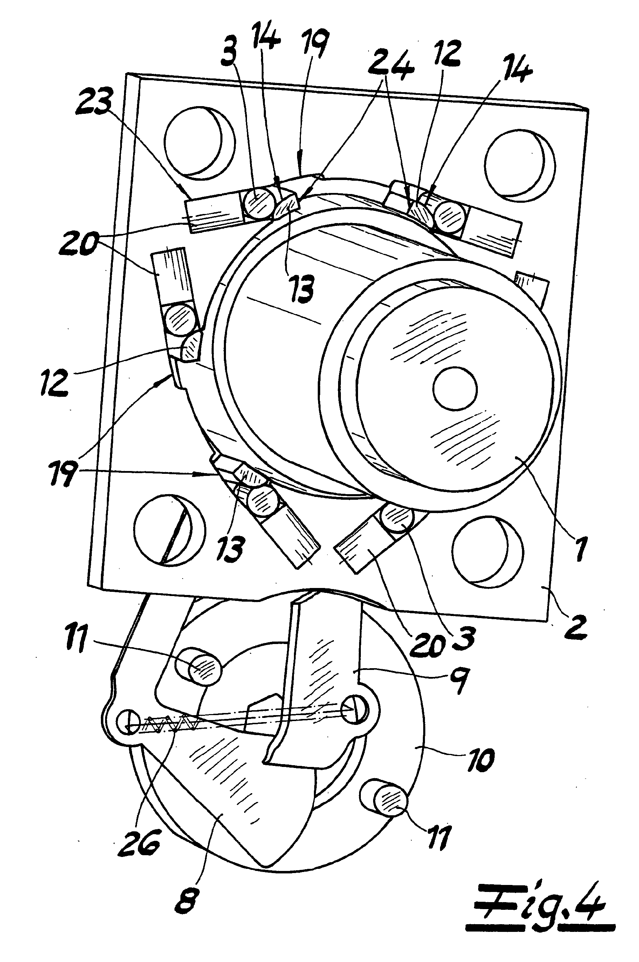

Fig. 4 und 5) lassen die Blockadeelemente bzw. Rollen 3 Drehbewegungen der Lenkspindel 1 um ihre Achse A zu, während in der zugehörigen Verriegelungsstellung (vgl. Fig. 3) solche Drehbewegungen unterbunden werden.

Erfindungsgemäß werden die Blockadeelemente 3 ausweislich der Fig. 4 und 5 in ihrer Entriegelungsstellung zur Verhinderung einer unbeabsichtigten Sperrwirkung von der Lenkspindel 1 abgehoben, während sie sich ansonsten auf ihr abwälzen. Folglich liegen die Blockadeelemente 3 in Verriegelungsstellung (vgl. Fig. 3) an der Lenkspindel 1 an und wälzen sich auf ihrem Außenumfang ab, so dass eine konisch zulaufende Kontur 19 in der Aufnahmebuchse 2 für ihre jeweilige Blockade zwischen eben dieser Kontur 19 und der Lenkspindel 1 sorgt, und zwar sowohl im Uhrzeigersinn als auch im Gegenuhrzeigersinn. Zu diesem Zweck sind die Blockadeelemente 3 und Konturen 19 jeweils paarweise angelegt, wobei im Rahmen des Ausführungsbeispiels drei Paare verwirklicht sind.

Die Blockadeelemente 3 werden mittels Schiebern 20 in Richtung ihrer jeweiligen Verriegelungsstellung vorgespannt. Zu diesem Zweck sind die Schieber 20 in ihrem Innern mit einer lediglich angedeuteten Feder 21 ausgerüstet, die sich am Grund 22 einer Nut 23 abstützt. Diese Nut 23 dient ausweislich der Fig. 3 zur Aufnahme und Führung des jeweiligen Schiebers 20 und geht an ihrer Oberseite in die blockierende Sperrfläche bzw. Flanke/Kontur 19 über, die das jeweilige Blockadeelement 3 klemmend aufnimmt.

In Entriegelungsstellung laufen die Blockadeelemente 3 auf die zugehörigen Anlaufschrägen 14 der Nasen 12, 13 auf, wie dies in Fig. 4 dargestellt ist. Das erreicht die Erfindung, indem die die Nasen 12, 13 jeweils tragenden Ringe 7a, 7b entsprechend gedreht werden, so dass die beiden Anlaufschrägen 14 der Nasen 12, 13 mit jeweils entgegengesetzter Neigung voneinander beabstandet werden. Dabei wird die Uhrzeigersinnnase 12 im Uhrzeigersinn bewegt, während die Gegenuhrzeigersinnnase 13 eine entgegengesetzte Beaufschlagung erfährt. Bei dieser Abstandsbewegung wird natürlich die jeweilige Feder 21 des Schiebers 20 zusammengedrückt, so dass auch in diesem Zusammenhang eine Klemmung der Blockadeelemente 3 erfolgt, nämlich zwischen der Oberseite der Nut 23 bzw. der blockierenden Fläche 19 und der jeweiligen Anlaufschräge 14 der zugehörigen Nase 12, 13.

Dagegen werden die Anlaufschrägen 14 mit ihren zugehörigen Nasen 12, 13 in Verriegelungsstellung (vgl. Fig. 3) zusammengefahren, und zwar indem jeweils den Schrägen 14 gegenüberliegende Kanten 24 der Nasen 12, 13 aneinander anliegen.

Die beiden Ausleger 8, 9 an den Ringen 7a, 7b werden mittels einer Zugfeder 26 aufeinander zu bewegt (vgl. Fig. 4), so dass im Normalfall die beiden Anlaufschrägen 14 auseinandergefahren sind und die zugehörigen Nasen 12, 13 den der Entriegelungsstellung entsprechenden Abstand aufweisen. Das gewährleistet die Erfindung dadurch, dass die Federkraft der Zugfeder 26 größer ist als die von den Federn 21 der jeweiligen Schieber 20 aufgebrachten Gegenkräfte. Folglich sorgt die Zugfeder 26 bei nichtbeaufschlagter Abtriebsscheibe 10 dafür, dass sich die Verriegelungsvorrichtung in Entriegelungsstellung befindet.

Um nun die beiden Ringe 7a, 7b bzw. die zugehörigen Ausleger 8, 9 auseinander zu drücken, wird die Abtriebsscheibe 10 mit den Auslenkzapfen 11 in eine Stellung bewegt, wie sie in Fig. 3 dargestellt ist. Gleichzeitig muss der zugehörige Antrieb die Rückstellkräfte der Zugfeder 26 überwinden, um die dort gezeigte Verriegelungsstellung realisieren zu können. Sobald die Auslenkzapfen 11 jedoch nicht (mehr) von dem zugehörigen (selbsthemmenden) Antrieb beaufschlagt werden, bewegt sich die dargestellte Verriegelungsvorrichtung wieder in ihre sichere und stabile Entriegelungsstellung gemäß den Fig. 4 und 5 zurück. - Selbstverständlich umfasst die Erfindung auch Varianten dergestalt, dass auf eine Zugfeder 26 verzichtet wird und insofern eine Zwangsführung der Ausleger 8, 9 und damit der Ringe 7a, 7b erfolgt.

Anhand der Fig. 5 erkennt man, dass in der Entriegelungsstellung der Blockadeelemente 3 der Sicherungsschieber 15 mit seinen Sicherungsstegen 16 jeweils zwischen die Blockadeelemente 3 bzw. die zugehörigen Nasen 12, 13 eingefahren ist. Zu diesem Zweck vollführt der Sicherungsschieber 15 eine Axialbewegung in Richtung der Achse A der Lenkspindel 1, so dass die hieran befestigten Sicherungsstege 16 zwischen die von der Lenkspindel beabstandeten Blockadeelemente 3 bzw. die Nasen 12, 13 mit den Anlaufschrägen 14 einfahren. In diesem Fall liegen die Kanten 24 der Nasen 12, 13 an dem jeweiligen Sicherungssteg 16 an.

Natürlich gelingt das problemlose Einfahren des Sicherungsschiebers 15 in die in Fig. 5 dargestellte und von dem Sensor abgefragte Endposition nur dann, wenn die Funktionsweise der Blockadeelemente bzw. Rollen 3 inklusive zugehörigen Schiebern 20 einwandfrei ist und insbesondere keine hiervon abgebrochenen Teile die beschriebenen Bewegungen blockieren. Folglich stellt die erreichte Endposition des Sicherungsschiebers 15 ein Indiz dafür dar, ob eine einwandfreie Funktion der Blockadeelemente 3 inklusive Schiebern 20 sowie der zugehörigen Nasen 12, 13 und der sie tragenden Ringe 7a, 7b sowie des Antriebs mit Abtriebsscheibe 10 und Auslenkzapfen 11 gewährleistet ist. Der mit dem Sicherungsschieber 15 zusammenwirkende Sensor nimmt also eine Art Funktionsprüfung vor, wobei Signale des Sensors an eine nicht dargestellte Steuereinheit übergeben werden.
In der Steuereinheit lassen sich die Signale dahingehend auswerten, ob eben die Entriegelungsstellung der Blockadeelemente 3 einwandfrei erreicht ist oder nicht. Im erstgenannten Fall gibt die Steuereinheit ein zugehöriges Kraftfahrzeug zur Bedienung frei, während die letztgenannte Variante zur Sperrung und einer Fehlermeldung führt.

## Patentansprüche

1. Verriegelungsvorrichtung für eine Lenkspindel (1) einer Lenkeinrichtung, mit einer die Lenkspindel (1) umschließenden Aufnahmebuchse (2) für hierin geführte und sich an der Lenkspindel (1) abwälzende Blockadeelemente (3), wobei die Blockadeelemente (3) in ihrer Entriegelungsstellung Drehbewegungen der Lenkspindel (1) zulassen und in ihrer Verriegelungsstellung unterbinden, **dadurch gekennzeichnet, dass** die Blockadeelemente (3) in ihrer Entriegelungsstellung zur Verhinderung einer unbeabsichtigten Sperrwirkung von der Lenkspindel abgehoben werden und sich in Verriegelungsstellung an die Lenkspindel (1) blockierend anlegen.

2. Verriegelungsvorrichtung nach Anspruch 1, **dadurch gekennzeichnet, dass** die Blockadeelemente (3) in Verriegelungsstellung zwischen der Lenkspindel (1) und der Aufnahmebuchse (2) verkeilt werden und auf diese Weise die Lenkspindel (1) blockieren.

3. Verriegelungsvorrichtung nach Anspruch 1 oder 2, **dadurch gekennzeichnet, dass** die Blockadeelemente (3) mittels Schiebern (20) in Richtung Verriegelungsstellung vorgespannt sind und in Entriegelungsstellung auf Anlaufschrägen (14) auflaufen, die die Blockadeelemente (3) in Entriegelungsstellung von der Lenkspindel (1) beabstanden und in Verriegelungsstellung entfernt werden, so dass sich die Blockadeelemente (3) an die Lenkspindel (1) anlegen und diese blockieren.

4. Verriegelungsvorrichtung nach einem der Ansprüche 1 bis 3, **dadurch gekennzeichnet, dass** die Anlaufschrägen (14) an Uhrzeigersinnnasen (12) und Gegenuhrzeigersinnnasen (13) ausgebildet sind, die jeweils von einem Ring (7a, 7b) getragen werden.

5. Verriegelungsvorrichtung nach Anspruch 4, **dadurch gekennzeichnet, dass** die beiden Ringe (7a, 7b) die Lenkspindel (1) koaxial und in Bezug auf eine Lenkspindelachse (A) drehbar umschließen.

6. Verriegelungsvorrichtung nach einem der Ansprüche 1 bis 5, **dadurch gekennzeichnet, dass** jeweils zwei Anlaufschrägen (14) mit entgegengesetzter Neigung zwischen zwei zugehörigen Blockadeelementen (3) angeordnet sind, wobei eine der beiden Blockadeelemente (3) die Lenkspindel (1) im Uhrzeigersinn und das andere Blockadeelement (3) gegen den Uhrzeigersinn sperrt.

7. Verriegelungsvorrichtung nach einem der Ansprüche 1 bis 6, **dadurch gekennzeichnet, dass** die beiden Anlaufschrägen (14) zwischen den zwei Blockadeelementen (3) in Entriegelungsstellung voneinander beabstandet und in Verriegelungsstellung zusammengefahren sind.

8. Verriegelungsvorrichtung nach einem der Ansprüche 1 bis 7, **dadurch gekennzeichnet, dass** zwischen die beiden Anlaufschrägen (14) bzw. die sie tragenden Nasen (12, 13) in Entriegelungsstellung jeweils ein Sicherungssteg (16) einfährt, der ein unbeabsichtigtes Anlegen der Blockadeelemente (3) oder von Teilen hiervon an die Lenkspindel (1) verhindert.

9. Verriegelungsvorrichtung nach einem der Ansprüche 1 bis 8, **dadurch gekennzeichnet, dass** der jeweilige Sicherungssteg (16) von einem Sicherungsschieber (15) getragen wird, der in Entriegelungsstellung der Blockadeelemente (3) in Richtung der Lenkspindelachse (A) der Lenkspindel (1) bewegt wird, so dass die hieran befestigten Sicherungsstege (16) zwischen die von der Lenkspindel (1) beabstandeten Blockadeelemente (3) bzw. Nasen (12, 13) mit Anlaufschrägen (14) einfahren.

10. Verriegelungsvorrichtung nach einem der Ansprüche 1 bis 9, **dadurch gekennzeichnet, dass** die Stellung des Sicherungsschiebers (15) in Axialrichtung mittels eines Sensors, beispielsweise Schalters, überprüft wird, dessen Signale von einer Steuereinheit zumindest dahingehend ausgewertet werden, ob die Entriegelungsstellung der Blockadeelemente (3) erreicht worden ist.
